# EUROPEAN PATENT SPECIFICATION

(11) **EP 3 598 264 B1**
(45) Date of publication and mention of the grant of the patent: **17.08.2022**
(21) Application number: 17901059.0
(22) Date of filing: 22.05.2017
(51) Int. Cl.: G05D 1/10, G05D 1/00, G05D 1/02

(54) **FLIGHT CONTROL METHOD AND DEVICE OF UNMANNED AERIAL VEHICLE, AND UNMANNED AERIAL VEHICLE**
FLUGSTEUERUNGSVERFAHREN UND -VORRICHTUNG EINES UNBEMANNTEN LUFTFAHRZEUGS SOWIE UNBEMANNTES LUFTFAHRZEUG
PROCÉDÉ ET DISPOSITIF DE COMMANDE DE VOL DE VÉHICULE AÉRIEN SANS PILOTE ET VÉHICULE AÉRIEN SANS PILOTE

(30) Priority: 16.03.2017 CN 201710157682
(43) Date of publication of application: 22.01.2020
(73) Proprietor: Guangzhou Xaircraft Technology Co., Ltd., Tianhe District Guangzhou Guangdong 510000 (CN)
(72) Inventor: PENG, Bin, Guangzhou, Guangdong 510000 (CN); GUAN, Wulie, Guangzhou, Guangdong 510000 (CN)
(74) Representative: Perronace, Andrea
(86) International application number: PCT/CN2017/085314
(87) International publication number: WO 2018/166068

(56) References cited:
- EP-A2- 2 177 966
- WO-A2-2005/123502
- CN-A- 104 536 455
- CN-A- 105 556 409
- CN-A- 105 867 407
- CN-A- 106 444 848
- US-A1- 2016 292 403

## Description

### Technical Field

The present disclosure relates to the technical field of unmanned aerial vehicles, and more particularly to a flight control method of an unmanned aerial vehicle, a flight control device of an unmanned aerial vehicle, and an unmanned aerial vehicle.

### Background

An Unmanned Aerial Vehicle (UAV) is an unmanned aircraft operated by a radio remote control apparatus and a self-contained program control device. UAVs are widely used in agricultural plant protection, urban management, geology, meteorology, electric power, disaster relief, video shooting and other industries.

UAV plant protection is taken as an example. When a UAV is carrying out plant protection operations, there are two ways of autonomous flight and UAV flight under the control of a remote control apparatus. When the way of controlling UAV flight by manually operating the remote control apparatus, it is difficult for an operator to judge an error generated in the flight of the UAV, the flight direction of the UAV is prone to deviation, and the deviation becomes larger as time accumulates, so that in the actual process, the operation of the UAV is difficult to cover a target area, which affects the effect of the plant protection operation.

D1 (US 2016292403A1) provides respective technical solutions; however, the above mentioned problem still remains unsolved.

### Summary

The invention is set forth in independent claims 1, 5, 9 and in dependent claims 2-4, 6-8, 10-12.

In view of the above problem, the embodiments of the present disclosure provide a flight control method of a UAV, a flight control device of a UAV, and a corresponding UAV.

The flight control method of an UAV includes: determining a flight track of the UAV; receiving a remote control signal sent by a remote control apparatus; converting the remote control signal into a flight controlled quantity of the UAV; generating a flight adjustment controlled quantity of the UAV according to a current location, the flight track and the flight controlled quantity, of the UAV; and executing a flight mission according to an action indicated by the flight adjustment controlled quantity, as to enable the UAV to run on the flight track.

The flight controlled quantity includes a pitching flight controlled quantity and a transverse flight controlled quantity, and generating the flight adjustment controlled quantity of the UAV according to the current location, the flight track and the flight controlled quantity, of the UAV includes: when the transverse flight controlled quantity is zero, determining a transverse adjustment controlled quantity according to the current location of the UAV and the flight track; and generating a flight adjustment controlled quantity according to the pitching flight controlled quantity and the transverse adjustment controlled quantity, the flight adjustment controlled quantity including a flight speed magnitude and a flight direction.

As at least one alternative embodiment, the flight adjustment controlled quantity includes a flight speed magnitude and a flight direction, and the flight controlled quantity includes a pitching flight controlled quantity; executing the flight mission according to the action indicated by the flight adjustment controlled quantity, as to enable the UAV to run on the flight track includes: flying to the flight track according to the flight speed magnitude and the flight direction; and executing the flight mission along the flight track according to an action indicated by the pitching flight controlled quantity.

As at least one alternative embodiment, the flight controlled quantity includes a pitching flight controlled quantity and a transverse flight controlled quantity, and the method further includes: when both the pitching flight controlled quantity and the transverse flight controlled quantity are zero, judging whether the UAV is located on the flight track; when a judging result is that the UAV is located on the flight track, hovering over the flight track; and when the judging result is that the UAV is not located on the flight track, flying to the flight track, and hovering over the flight track.

As at least one alternative embodiment, flying to the flight track includes: determining a distance between the current location of the UAV and the flight track; and flying to the flight track according to a route indicated by the distance.

The flight control device of an UAV includes: a processor, wherein the processor is configured to execute the following program modules stored in a memory: a determining module, configured to determine a flight track of the UAV; a receiving module, configured to receive a remote control signal sent by a remote control apparatus; a converting module, configured to convert the remote control signal into a flight controlled quantity of the UAV; a generating module, configured to generate a flight adjustment controlled quantity of the UAV according to a current location, the flight track and the flight controlled quantity, of the UAV; and an executing module, configured to execute a flight mission according to an action indicated by the flight adjustment controlled quantity, as to enable the UAV to run on the flight track.

The flight controlled quantity includes a pitching flight controlled quantity and a transverse flight controlled quantity, and the generating module includes: a determining sub-module, configured to determine, when the transverse flight controlled quantity is zero, a transverse adjustment controlled quantity according to the current location of the UAV and the flight track; and a generating sub-module, configured to generate the flight adjustment controlled quantity according to the pitching flight controlled quantity and the transverse adjustment controlled quantity, the flight adjustment controlled quantity including a flight speed magnitude and a flight direction.

As at least one alternative embodiment, the flight adjustment controlled quantity includes a flight speed magnitude and a flight direction, the flight controlled quantity includes a pitching flight controlled quantity, and the executing module includes: a first executing sub-module, configured to fly to the flight track according to the flight speed magnitude and the flight direction; and a second executing sub-module, configured to execute the flight mission along the flight track according to an action indicated by the pitching flight controlled quantity.

As at least one alternative embodiment, the flight controlled quantity includes a pitching flight controlled quantity and a transverse flight controlled quantity, and the executing module includes: a judging sub-module, configured to judge, when both the pitching flight controlled quantity and the transverse flight controlled quantity are zero, whether the UAV is located on the flight track; a hovering sub-module, configured to hover over the flight track when the UAV runs on the flight track; and an executing sub-module, configured to fly to the flight track and hover over the flight track when the UAV does not run on the flight track.

As at least one alternative embodiment, the executing sub-module includes: a determining element, configured to determine a distance between the current location of the UAV and the flight track; and a flight element, configured to fly to the flight track according to a route indicated by the distance.

In order to solve the above problem, An Unmanned Aerial Vehicle, UAV, includes : a flight control system, the flight control system including a flight controller, a positioning component and a communicating component, wherein the communicating component is configured to receive a remote control signal sent by a remote control apparatus, and transmit the remote control signal to the flight controller; the positioning component is configured to acquire a current location of the UAV, and transmit the current location of the UAV to the flight controller; and the flight controller is configured to determine a flight track of the UAV, convert the remote control signal into a flight controlled quantity of the UAV, generate a flight adjustment controlled quantity of the UAV according to the current location, the flight track and the flight controlled quantity, of the UAV, and control the UAV to execute a flight mission according to an action indicated by the flight adjustment controlled quantity, as to enable the UAV to run on the flight track.

The flight controlled quantity includes a pitching flight controlled quantity and a transverse flight controlled quantity; and the flight controller is configured to, when generating the flight adjustment controlled quantity of the UAV, determine, if the transverse flight controlled quantity is zero, a transverse adjustment controlled quantity according to the current location of the UAV and the flight track, and generate the flight adjustment controlled quantity according to the pitching flight controlled quantity and the transverse adjustment controlled quantity, the flight adjustment controlled quantity including a flight speed magnitude and a flight direction.

As at least one alternative embodiment, the flight adjustment controlled quantity includes a flight speed magnitude and a flight direction, and the flight controlled quantity includes a pitching flight controlled quantity; and the flight controller is configured to, when controlling the UAV to execute the flight mission according to the action indicated by the flight adjustment controlled quantity, control the UAV to fly to the flight track according to the flight speed magnitude and the flight direction, and control the UAV to execute the flight mission along the flight track according to an action indicated by the pitching flight controlled quantity.

As at least one alternative embodiment, the flight controlled quantity includes a pitching flight controlled quantity and a transverse flight controlled quantity; and the flight controller is configured to, when controlling the UAV to execute the flight mission according to the action indicated by the flight adjustment controlled quantity, judge, when both the pitching flight controlled quantity and the transverse flight controlled quantity are zero, whether the UAV is located on the flight track, control, if the UAV runs on the flight track, the UAV to hover over the flight track, and control, if the UAV does not run on the flight track, the UAV to fly to the flight track and hover over the flight track.

As at least one alternative embodiment, the flight controller is configured to, when controlling the UAV to fly to the flight track, determine a distance between the current location of the UAV and the flight track, and fly to the flight track according to a route indicated by the distance.

Compared with the background, the embodiments of the present disclosure include the following advantages:
According to the embodiments of the present disclosure, after determining a flight track of the UAV, a remote control signal sent by a remote control apparatus is received and converted into a flight controlled quantity of the UAV, a flight adjustment controlled quantity of the UAV is generated according to the current location, the flight track and the flight controlled quantity, of the UAV, and a flight mission can be further executed according to an action indicated by the flight adjustment controlled quantity, as to enable the UAV to run on the flight track. According to the embodiments of the present disclosure, when the flight of the UAV is manually controlled by using the remote control apparatus, according to a transverse adjustment controlled quantity, it can be ensured that the UAV does not yaw but flies on the correct track all the time in the case of a long flight, thereby improving the flight accuracy. For a plant protection UAV, the accuracy and efficiency of plant protection operations are improved.

### Brief Description of the Drawings

Fig. 1 is a step flowchart of a flight control method of a UAV according to an embodiment of the present disclosure;
Fig. 2 is a schematic diagram of generating a flight adjustment controlled quantity according to the present disclosure;
Fig. 3 is a step flowchart of a flight control method of a UAV according to another embodiment of the present disclosure;
Fig. 4 is a schematic diagram of a flight area according to the present disclosure;
Fig. 5 is a structure block diagram of a flight control device of a UAV according to an embodiment of the present disclosure; and
Fig. 6 is a structure block diagram of a UAV according to the present disclosure.

### Detailed Description of the Embodiments

In order to make the above objects, features and advantages of the present disclosure become more apparent and understood, the present disclosure is further described in detail below with reference to the drawings and specific implementation manners.

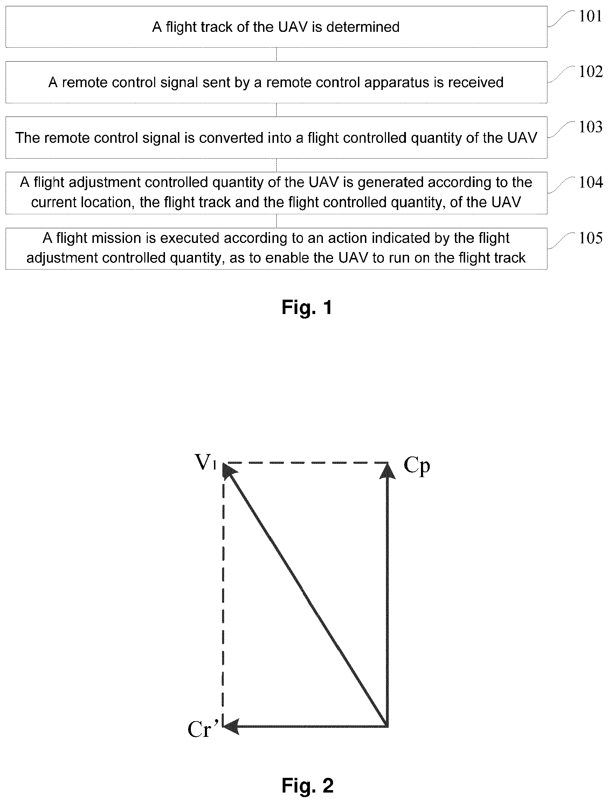

Referring to Fig. 1, it shows a step flowchart of a flight control method of a UAV according to an embodiment of the present disclosure. The method may specifically include the steps as follows.

At step 101, a flight track of the UAV is determined.

In the embodiment of the present disclosure, the UAV may be applied in a plant protection operation, for example, a plant protection UAV for performing plant protection operations, such as pesticide spraying or fertilizer spraying on farmlands or mountain forests, or a UAV for performing other tasks such as shooting or mapping. The specific type of the UAV is not limited in the embodiment of the present disclosure.

In the embodiment of the present disclosure, the UAV needs to first determine a flight track of the current flight mission before performing the flight mission, and to then fly according to the flight track.

The flight track of the embodiment of the present disclosure may be generated by a user or a UAV operator using a mapping system, or may be generated by selecting, by a user or a UAV operator, an operation boundary on a map. After a flight track is generated, information of the flight track may be sent to a flight control system of the UAV. After receiving the information of the flight track, the flight control system may start executing the flight mission autonomously or under the remote operation of the operator. A person skilled in the art may also select other methods to generate the flight track of the UAV, which is not limited by the embodiment of the present disclosure.

The flight track of the embodiment of the present disclosure may be a preset route or route generated according to actual needs. For example, the flight track may be a straight line, which may be represented by two-point coordinates, or by an origin and direction.

For example, the flight track of the UAV may be expressed as: {A=(lat1, Ing1), B=(lat2, Ing2), D=A->B}, where A and B are two points respectively represented by latitude and longitude coordinates, D is a flight direction of the UAV, and A->B indicates that the UAV is flying from point A to point B. Alternatively, the flight track of the UAV may also be expressed as: {A=(lat, Ing), D=degree}, where A is an origin of the flight, and D is a true north direction angle, that is, the UAV may fly from point A in the direction indicated by D. Of course, a person skilled in the art may also select other methods to represent the flight track of the UAV, which is not limited by the embodiment of the present disclosure.

In an operating area of a UAV, multiple flight tracks may be set so that the operating area of the UAV may cover an actual operation object. For example, as for spraying pesticides on a farmland, multiple flight tracks may be set for the farmland.

At step 102, a remote control signal sent by a remote control apparatus is received.

In the embodiment of the present disclosure, the UAV may be a drone that is manually operated by a remote control apparatus for flight control. The remote control apparatus may be a remote control with a joystick that may be located in the middle of the remote control by default. When the user pushes the joystick forward, the UAV may be controlled to fly forward, and when the user pulls the joystick backward, the UAV may be controlled to fly backward. Similarly, when the user operates the joystick to move leftward or rightward, the UAV may be controlled to fly leftward or rightward. Of course, a person skilled in the art may set a corresponding relationship between different operation modes and flight states according to actual needs, and the user controls the flight of the UAV according to a specific operation mode, which is not limited by the embodiment of the present disclosure.

The remote control apparatus may also be a remote control with a touch screen that displays an operational control that can be operated in a manner similar to the joystick. A person skilled in the art may also use other types of remote control apparatuses, which is not limited by the embodiment of the present disclosure.

In the embodiment of the present disclosure, when the UAV executes the flight mission, the user may control the flight of the UAV by operating the remote control apparatus. As at least one alternative embodiment, when the user operates the joystick, the remote controller may issue a remote control signal for the UAV, so that the UAV may adjust the current flight state according to the indication of the remote control signal after receiving the remote control signal.

At step 103, the remote control signal is converted into a flight controlled quantity of the UAV.

In the present embodiment, the remote control signal may be a pulse width signal, for example, a pulse width signal of 1ms to 2ms. After receiving the remote control signal sent by the remote control apparatus, the UAV may further convert the remote control information into a flight controlled quantity of the UAV.

As at least one alternative implementation, the remote control signal may be converted into a flight controlled quantity of the UAV according to a relationship between a pulse width and a flight speed, and the flight controlled quantity may include a pitching flight controlled quantity and a transverse flight controlled quantity.

In the embodiment of the present disclosure, the flight controlled quantity may be expressed by {Cp, Cr}, where Cp represents the pitching flight controlled quantity, that is, the speed magnitude and the direction of a pitching flight, and Cr represents the transverse flight controlled quantity, that is, the speed magnitude and the direction of a transverse flight.

As an example of the present disclosure, when Cp is a positive number, it indicates that the UAV flies forward; when Cp is a negative number, it indicates that the UAV flies backward; when Cr is a positive number, it indicates that the UAV flies leftward; and when Cr is a negative number, it indicates that the UAV flies rightward. Of course, those skilled in the art may set a correspondence between a specific value and the flight direction of the UAV according to actual needs. For example, when Cp is a positive number, it indicates that the UAV flies backward, and when Cp is a negative number, it indicates that the UAV flies forward, which is not limited by the embodiment of the present disclosure.

At step 104, a flight adjustment controlled quantity of the UAV is generated according to the current location, the flight track and the flight controlled quantity, of the UAV.

In the embodiment of the present disclosure, in order to ensure that a UAV can always fly along a determined flight track, a flight adjustment controlled quantity of the UAV may be generated in real time according to a deviation between the current location of the UAV and the flight track and according to a flight controlled quantity obtained by converting the remote control signal sent by the remote control apparatus operated by a user, and the UAV automatically performs track rectification according to the indication of the flight adjustment controlled quantity, as to enable the UAV to always be located on the correct flight track.

For example, when the transverse flight controlled quantity is zero and the pitching flight controlled quantity is not zero, that is, when Cr=0 and Cp≠0, it can be considered that the UAV flies in a straight line, where when Cp>0, it indicates that the UAV flies forward, and when Cp<0, it indicates that the UAV flies backward. At this time, the transverse adjustment controlled quantity may be determined according to the current location and flight track of the UAV, and the UAV is track-corrected, so that the UAV can always run on the correct flight track.

In the embodiment of the present disclosure, a preset controller may be used to generate a flight adjustment controlled quantity of the UAV to implement track rectification of the UAV, such as a PID controller.

At present, a closed-loop automatic control technology is based on the concept of feedback to reduce uncertainty, and the elements of feedback theory include three parts: measurement, comparison and execution. The key is to measure an actual value of a controlled variable, which is compared with an expected value. The deviation between the actual value and the expected value is used to correct the response of a system to execute adjustment control. In engineering practice, the most widely used adjuster control law is proportional, integral and differential control, referred to as PID control. A PID controller (proportional-integral-differential controller) is a feedback loop component commonly used in industrial control applications, including of a proportional unit P, an integral unit I and a differential unit D. The basis of PID control is a proportional control; an integral control may eliminate a steady-state error; and a differential control may accelerate the response speed of a large inertia system and weaken an overshoot trend.

In the embodiment of the present disclosure, during the flight of the UAV, the PID controller may output a transverse adjustment controlled quantity in real time to correct the deviation between the UAV and the flight track during the flight.

In the embodiment of the present disclosure, Cr' may be used to indicate the transverse adjustment controlled quantity, which is similar to the transverse flight controlled quantity Cr. When Cr'>0, the transverse adjustment controlled quantity indicates that the UAV flies leftward, and when Cr'<0, the transverse adjustment controlled quantity indicates that the UAV flies rightward.

After the transverse adjustment controlled quantity is generated, a flight adjustment controlled quantity may be further generated according to the pitching flight controlled quantity and the transverse adjustment controlled quantity, the flight adjustment controlled quantity including a flight speed magnitude and a flight direction.

As shown in Fig. 2, it is a schematic diagram of generating a flight adjustment controlled quantity according to the present disclosure. In Fig. 2, Cp>0 indicates that the UAV flies forward, and Cr'>0 indicates that the UAV flies leftward, so the flight direction of a flight adjustment controlled quantity V1 generated according to Cp and Cr' is northwest, and the flight speed of the flight adjustment controlled quantity V1 can be obtained according to a formula sqrt (Cp<2> and Cr'<2>), where sqrt represents a square root of the sum of squares of Cp and Cr'.

It is to be noted that when the pitching flight controlled quantity and the transverse flight controlled quantity are not zero, that is, Cp ≠ 0 and Cr ≠ 0, the UAV may fly according to the flight speed and direction given by the pitching flight controlled quantity and the transverse flight controlled quantity without deviation correction of the flight track of the UAV.

For example, when Cr>0 and Cp>0, it can be considered that the UAV is simultaneously adjusted leftward during the forward and backward flight. At this time, whether the UAV deviates from the flight track may not be judged, that is, track deviation correction is not performed on the UAV, so that a flight speed may be generated according to Cp and Cr, and then the UAV may fly according to the flight speed.

At step 105, a flight mission is executed according to an action indicated by the flight adjustment controlled quantity, as to enable the UAV to run on the flight track.

In the embodiment of the present disclosure, after determining the flight adjustment controlled quantity, the UAV may execute the flight mission according to the action indicated by the flight adjustment controlled quantity, thereby enabling the UAV to fly according to the flight track.

As at least one alternative implementation, the UAV may fly to the flight track according to the flight speed magnitude and the flight direction included in the flight adjustment controlled quantity. When the UAV is already in the flight track, the UAV may execute the flight mission along the flight track merely according to an action indicated by the pitching flight controlled quantity.

It is to be noted that during the flight, the UAV may judge in real time whether to receive an instruction for resetting a flight track. When a new flight track is determined, the UAV may fly along the new flight track according to the above steps.

In the embodiments of the present disclosure, after determining a flight track of the UAV, a remote control signal sent by a remote control apparatus is received and converted into a flight controlled quantity of the UAV, a flight adjustment controlled quantity of the UAV is generated according to the current location, the flight track and the flight controlled quantity, of the UAV, and a flight mission can be further executed according to an action indicated by the flight adjustment controlled quantity, as to enable the UAV to run on the flight track. According to the embodiments of the present disclosure, when the flight of the UAV is manually controlled by using the remote control apparatus, it can be ensured that the UAV does not yaw but flies on the correct track all the time in the case of a long flight, thereby improving the flight accuracy. For a plant protection UAV, the accuracy and efficiency of plant protection operations are improved.

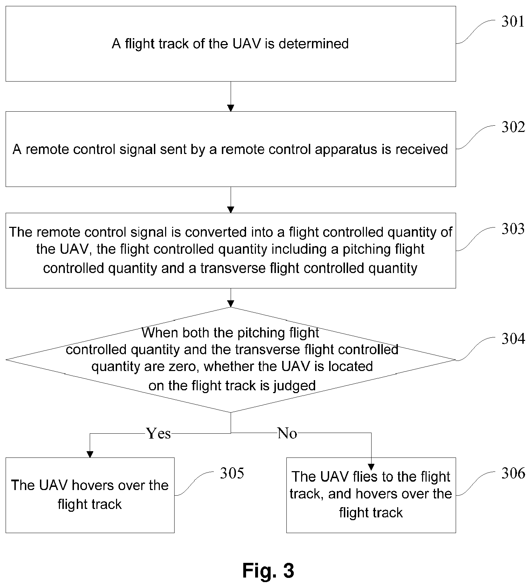

Referring to Fig. 3, it shows a step flowchart of a flight control method of a UAV according to another embodiment of the present disclosure. The method may specifically include the steps as follows.

At step 301, a flight track of the UAV is determined.

In the embodiment of the present disclosure, the UAV may perform flight control by manually operating a remote control apparatus, and the UAV may be applied in a plant protection UAV, which is configured to perform plant protection operations, such as pesticide spraying or fertilizer spraying on farmlands or mountain forests. Of course, it may also be a UAV for executing other missions, such as shooting a UAV or mapping a UAV. The specific type of the UAV is not limited in the embodiment of the present disclosure.

In the embodiment of the present disclosure, before executing a flight mission, the UAV may first determine a flight track for executing the current flight mission, and the flight track may be a preset route or a route generated according to actual needs. For example, the flight track may be a straight line.

At step 302, a remote control signal sent by a remote control apparatus is received.

At step 303, the remote control signal is converted into a flight controlled quantity of the UAV, the flight controlled quantity including a pitching flight controlled quantity and a transverse flight controlled quantity.

In the embodiment of the present disclosure, the UAV may fly along a certain track under the manual operation of a user. For example, the user may issue a remote control signal for the UAV by operating a joystick of a remote controller.

Usually, the remote control signal may be a pulse width signal. Therefore, after receiving the above remote control signal, the UAV may convert the remote control signal into a flight controlled quantity of the UAV according to a direct proportion relationship between a pulse width and a flight speed, and the flight controlled quantity may include a pitching flight controlled quantity and a transverse flight controlled quantity.

In the embodiment of the present disclosure, the flight controlled quantity may be expressed by {Cp, Cr}, where Cp represents the pitching flight controlled quantity, and Cr represents the transverse flight controlled quantity.

At step 304, when both the pitching flight controlled quantity and the transverse flight controlled quantity are zero, it is judged whether the UAV is located on the flight track.

In the embodiment of the present disclosure, when the pitching flight controlled quantity Cp=0 and the transverse flight controlled quantity Cr=0, it can be considered that the UAV is currently in a hovering state, and at this time, it may be further judged whether the current hovering position of the UAV is on the flight track. If so, step 305 may be performed, and otherwise, step 306 may be performed.

At step 305, the UAV hovers over the flight track.

At step 306, the UAV flies to the flight track, and hovers over the flight track.

In the embodiment of the present disclosure, if the current hovering position of the UAV is located on the flight track, the UAV may be controlled to continue hovering at the current position for control signal; if the current hovering position of the UAV is not on the flight track, the UAV may be controlled to fly back to the flight track.

As at least one alternative implementation, a PID controller may be used to determine a distance between the current location of the UAV and the flight track, and then control the UAV to fly to the flight track according to a route indicated by the distance.

In the embodiment of the present disclosure, the distance may be a vertical distance between the current location of the UAV and the flight track, that is, a distance from a point to a straight line, so that the UAV may return to the flight track through the flight in the shortest route. Of course, a person skilled in the art may also select other routes as the distance between the current location of the UAV and the flight track according to actual needs, which is not limited by the embodiment of the present disclosure.

According to the embodiments of the present disclosure, when the flight of the UAV is manually controlled by using the remote control apparatus, when both the pitching flight controlled quantity and the transverse flight controlled quantity obtained by converting the remote control signal are zero, if the UAV is not on the flight track currently, the UAV may automatically fly back to the flight track, and that the UAV does not yaw but is always located on the correct track all the time in the case of a long flight can be ensured, thereby improving the flight accuracy.

For ease of understanding, a flight control method of a UAV of the present disclosure will be described below with a complete example.

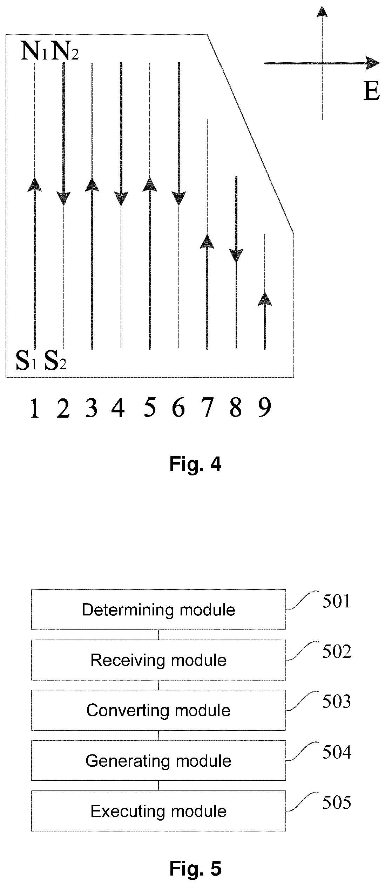

Fig. 4 shows a schematic diagram of a flight area according to the present disclosure. A flight area shown in Fig. 4 includes 9 tracks, the flight area may be a farmland area where plant protection operations are required, and a plant protection UAV may complete the plant protection operation of the farmland area along the above 9 tracks. For example, the farmland area is sprayed with pesticides, etc., wherein E is direction indication information, expressed as the east.

It is to be noted that the order of the labels for the tracks is merely an example. During the actual flight, the UAV may be switched between any tracks; moreover, the direction of the mark on the track is also reversible, that is, the UAV may start flying along the first track from the south or start from the north.

First, a UAV operating device may be used to instruct the UAV to fly into an operating area, and then the UAV is remotely controlled to operate by using the above method.
1. The UAV is controlled to fly to a southern end point S1 of a track 1{S₁, N₁, S₁->N₁}, and a flight track is set as the track 1{S₁, N₁, S₁->N₁}.
2. A forward joystick is pushed, and a spraying system is opened at the same time. At this time, a flight controlled quantity is {Cp>0, Cr=0}, so the UAV may fly to N₁ at a speed Cp; during the flight of S₁->N₁, for a trajectory deviation, a PID controller is used to obtain a flight adjustment controlled quantity {Cp, Cr'} for forward flight and deviation correction.
3. After the UAV flies to N₁, according to the actual situation, the UAV is controlled to a northern end point N₂ of a next track 2{S₂, N₂, N₂->S₂}, and the flight track is reset as the track 2{S₂, N₂, N₂->S₂} (i.e., switching from the track 1 to the track 2).
4. A backward joystick is pushed, and a spraying system is opened at the same time. At this time, a flight controlled quantity is {Cp<0, Cr=0}, so the UAV flies to S₂ at a speed Cp; during the flight of N₂->S₂, for a trajectory deviation, a PID controller is used to obtain a flight adjustment controlled quantity {Cp, Cr'} for forward flight and deviation correction.
5. The above operation steps are repeated until the UAV flies all over the flight area covered by the 9 flight tracks in Fig. 4.

It is to be noted that, for the method embodiments, for the sake of simple description, they are all expressed as a series of action combinations, but those skilled in the art should understand that the embodiments of the present disclosure are not limited by the described action sequence, because certain steps may be performed in other sequences or concurrently in accordance with the embodiments of the present disclosure. In the following, those skilled in the art should also understand that the embodiments described in the specification are all preferred embodiments, and the actions involved are not necessarily required in the embodiments of the present disclosure.

Referring to Fig. 5, it shows a structure block diagram of a flight control device of a UAV according to an embodiment of the present disclosure. The device may include: a determining module 501, a receiving module 502, a converting module 503, a generating module 504, and an executing module 505.

The determining module 501 is configured to determine a flight track of the UAV.

The receiving module 502 is configured to receive a remote control signal sent by a remote control apparatus.

The converting module 503 is configured to convert the remote control signal into a flight controlled quantity of the UAV.

The generating module 504 is configured to generate a flight adjustment controlled quantity of the UAV according to the current location, the flight track and the flight controlled quantity, of the UAV.

The executing module 505 is configured to execute a flight mission according to an action indicated by the flight adjustment controlled quantity, as to enable the UAV to run on the flight track.

In the embodiment of the present disclosure, the flight controlled quantity may include a pitching flight controlled quantity and a transverse flight controlled quantity, and the generating module 504 may include a determining sub-module and a generating sub-module.

The determining sub-module is configured to determine, when the transverse flight controlled quantity is zero, a transverse adjustment controlled quantity according to the current location of the UAV and the flight track.

The generating sub-module is configured to generate a flight adjustment controlled quantity according to the pitching flight controlled quantity and the transverse adjustment controlled quantity, the flight adjustment controlled quantity including a flight speed magnitude and a flight direction.

In an embodiment of the present disclosure, the executing module 505 may specifically include a first executing sub-module and a second executing sub-module.

The first executing sub-module is configured to fly to the flight track according to the flight speed magnitude and the flight direction.

The second executing sub-module is configured to execute a flight mission along the flight track according to an action indicated by the pitching flight controlled quantity.

In another embodiment of the present disclosure, the flight controlled quantity includes a pitching flight controlled quantity and a transverse flight controlled quantity, and the executing module 505 may include a judging sub-module, a hovering sub-module and an executing sub-module.

The judging sub-module is configured to judge, when both the pitching flight controlled quantity and the transverse flight controlled quantity are zero, whether the UAV is located on the flight track.

The hovering sub-module is configured to hover over the flight track when the UAV runs on the flight track.

The executing sub-module is configured to, when the UAV does not run on the flight track, fly to the flight track and hover over the flight track.

In the embodiment of the present disclosure, the executing sub-module may include a determining element and a flight element.

The determining element is configured to determine a distance between the current location of the UAV and the flight track.

The flight element is configured to fly to the flight track according to a route indicated by the distance.

For the device embodiment, since it is basically similar to the method embodiment, the description is relatively simple, and the relevant parts can be referred to the description of the method embodiment.

The embodiment of the present disclosure also provides another embodiment of a flight control device of a UAV. In the present embodiment, the flight control device of the UAV includes: a processor, wherein the processor is configured to execute the following program modules stored in a memory: a determining module, configured to determine a flight track of the UAV; a receiving module, configured to receive a remote control signal sent by a remote control apparatus; a converting module, configured to convert the remote control signal into a flight controlled quantity of the UAV; a generating module, configured to generate a flight adjustment controlled quantity of the UAV according to the current location, the flight track and the flight controlled quantity, of the UAV; and an executing module, configured to execute a flight mission according to an action indicated by the flight adjustment controlled quantity, as to enable the UAV to run on the flight track.

In one embodiment, the flight controlled quantity may include a pitching flight controlled quantity and a transverse flight controlled quantity, and the generating module may include: a determining sub-module, configured to determine, when the transverse flight controlled quantity is zero, a transverse adjustment controlled quantity according to the current location of the UAV and the flight track; and a generating sub-module, configured to generate a flight adjustment controlled quantity according to the pitching flight controlled quantity and the transverse adjustment controlled quantity, the flight adjustment controlled quantity including a flight speed magnitude and a flight direction.

In an embodiment of the present disclosure, the flight adjustment controlled quantity includes a flight speed magnitude and a flight direction, the flight controlled quantity includes a pitching flight controlled quantity, and the executing module may include: a first executing sub-module, configured to fly to the flight track according to the flight speed magnitude and the flight direction; and a second executing sub-module, configured to execute a flight mission along the flight track according to an action indicated by the pitching flight controlled quantity.

In another embodiment of the present disclosure, the flight controlled quantity includes a pitching flight controlled quantity and a transverse flight controlled quantity, and the executing module may include: a judging sub-module, configured to judge, when both the pitching flight controlled quantity and the transverse flight controlled quantity are zero, whether the UAV is located on the flight track; a hovering sub-module, configured to hover over the flight track when the UAV runs on the flight track; and an executing sub-module, configured to, when the UAV does not run on the flight track, fly to the flight track and hover over the flight track.

In the embodiment of the present disclosure, the executing sub-module may include: a determining element, configured to determine a distance between the current location of the UAV and the flight track; and a flight element, configured to fly to the flight track according to a route indicated by the distance.

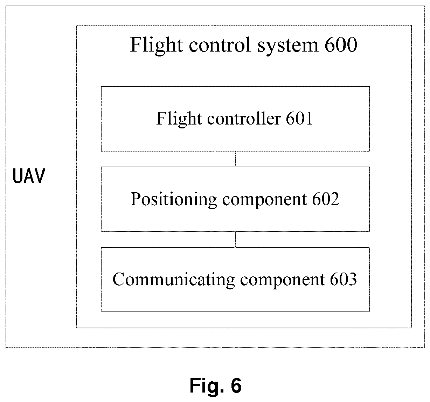

Referring to Fig. 6, it shows a structure block diagram of a UAV according to the present disclosure. The UAV may include a flight control system 600. The flight control system 600 may include a flight controller 601, a positioning component 602 and a communicating component 603.

The communicating component 603 is configured to receive a remote control signal sent by a remote control apparatus, and transmit the remote control signal to the flight controller 601.

The positioning component 602 is configured to acquire a current location of the UAV, and transmit the current location of the UAV to the flight controller 601.

The flight controller 601 is configured to determine a flight track of the UAV, convert the remote control signal into a flight controlled quantity of the UAV, generate a flight adjustment controlled quantity of the UAV according to the current location, the flight track and the flight controlled quantity, of the UAV, and control the UAV to execute a flight mission according to an action indicated by the flight adjustment controlled quantity, as to enable the UAV to run on the flight track.

As at least one alternative implementation, the flight controller 601 may include a storage medium. The storage medium is configured to store a program, wherein the program is run to determine a flight track of the UAV, convert the remote control signal into a flight controlled quantity of the UAV, generate a flight adjustment controlled quantity of the UAV according to the current location, the flight track and the flight controlled quantity, of the UAV, and control the UAV to execute a flight mission according to an action indicated by the flight adjustment controlled quantity, as to enable the UAV to run on the flight track.

In the embodiment of the present disclosure, the flight controlled quantity may include a pitching flight controlled quantity and a transverse flight controlled quantity. The flight controller 601 is configured to, when generating the flight adjustment controlled quantity of the UAV, determine, if the transverse flight controlled quantity is zero, a transverse adjustment controlled quantity according to the current location of the UAV and the flight track, and generate a flight adjustment controlled quantity according to the pitching flight controlled quantity and the transverse adjustment controlled quantity, the flight adjustment controlled quantity including a flight speed magnitude and a flight direction.

In the embodiment of the present disclosure, the flight controller 601 is configured to, when controlling the UAV to execute a flight mission according to an action indicated by the flight adjustment controlled quantity, control the UAV to fly to the flight track according to the flight speed magnitude and the flight direction, and control the UAV to execute a flight mission along the flight track according to an action indicated by the pitching flight controlled quantity.

In the embodiment of the present disclosure, the flight controlled quantity may include a pitching flight controlled quantity and a transverse flight controlled quantity. The flight controller 601 is configured to, when controlling the UAV to execute a flight mission according to an action indicated by the flight adjustment controlled quantity, judge, when both the pitching flight controlled quantity and the transverse flight controlled quantity are zero, whether the UAV is located on the flight track, control, if the UAV runs on the flight track, the UAV to hover over the flight track, and control, if the UAV does not run on the flight track, the UAV to fly to the flight track and hover over the flight track.

In the embodiment of the present disclosure, the flight controller 601 is configured to, when controlling the UAV to fly to the flight track, determine a distance between the current location of the UAV and the flight track, and fly to the flight track according to a route indicated by the distance.

Various embodiments in the present specification are described in a progressive manner, each embodiment focuses on differences from other embodiments, and the identical or similar parts between the various embodiments can be referred to each other.

A person skilled in the art should understand that the embodiments of the present disclosure may be provided as a method, a device or a computer program product. Thus, the embodiments of the present disclosure may adopt forms of complete hardware embodiments, complete software embodiments or embodiments integrating software and hardware. Moreover, the embodiments of the present disclosure may adopt the form of a computer program product implemented on one or more computer available storage media (including, but not limited to, a disk memory, a CD-ROM, an optical memory and the like) containing computer available program codes.

The embodiments of the present disclosure are described with reference to flowcharts and/or block diagrams of the method, the terminal device (system) and the computer program product according to the embodiments of the present disclosure. It is to be understood that each flow and/or block in the flowcharts and/or the block diagrams and a combination of the flows and/or the blocks in the flowcharts and/or the block diagrams may be implemented by computer program instructions. These computer program instructions may be provided for a general computer, a dedicated computer, an embedded processor or processors of other programmable data processing terminal devices to generate a machine, so that an apparatus for achieving functions designated in one or more flows of the flowcharts and/or one or more blocks of the block diagrams is generated via instructions executed by the computers or the processors of the other programmable data processing terminal devices.

These computer program instructions may also be stored in a computer readable memory capable of guiding the computers or the other programmable data processing terminal devices to work in a specific mode, so that a manufactured product including an instruction apparatus is generated via the instructions stored in the computer readable memory, and the instruction apparatus achieves the functions designated in one or more flows of the flowcharts and/or one or more blocks of the block diagrams.

These computer program instructions may also be loaded to the computers or the other programmable data processing terminal devices, so that processing implemented by the computers is generated by executing a series of operation steps on the computers or the other programmable terminal devices, and therefore the instructions executed on the computers or the other programmable terminal devices provide a step of achieving the functions designated in one or more flows of the flowcharts and/or one or more blocks of the block diagrams.

While preferred embodiments of the embodiments of the present disclosure have been described, those skilled in the art can make additional changes and modifications to the embodiments once knowing a basic creativity concept. Therefore, the appended claims are intended to be interpreted as including the preferred embodiments and all the changes and modifications falling within the scope of the embodiments of the present disclosure.

Finally, it is also to be noted that relational terms such as first and second are used merely to distinguish one entity or operation from another entity or operation herein, and do not necessarily require or imply the existence of any such actual relationship or order between these entities or operations. Moreover, the terms "include", "contain" or any other variations thereof are intended to cover a non-exclusive inclusion, such that a process, method, article or terminal device including a series of elements not only includes those elements, but also includes those elements that are not explicitly listed, or includes elements inherent to such a process, method, article or terminal device. Under the condition of no more limitations, it is not excluded that additional identical elements exist in the process, method, article or terminal device including elements defined by a sentence "including a ...".

The above is a detailed description of a flight control method of a UAV, a flight control apparatus of a UAV and a UAV provided by the present disclosure. The principle and implementation manner of the present disclosure are described in the specific examples herein. The description of the embodiments is only for helping to understand the method of the present disclosure and its core ideas. Furthermore, for those of ordinary skill in the art, according to the idea of the present disclosure, there will be changes in specific implementation manners and application scopes.

## Claims

1. A flight control method of an Unmanned Aerial Vehicle, UAV, comprising:
Determining (101) a flight track of the UAV;
receiving (102) a remote control signal sent by a remote control apparatus which is operated manually;
converting (103) the remote control signal into a flight controlled quantity of the UAV;
generating (104) a flight adjustment controlled quantity of the UAV according to a current location, the flight track and the flight controlled quantity, of the UAV; and
executing (105) a flight mission according to an action indicated by the flight adjustment controlled quantity, as to enable the UAV to run on the flight track;
wherein the flight controlled quantity comprises a pitching flight controlled quantity and a transverse flight controlled quantity, and generating the flight adjustment controlled quantity of the UAV according to the current location, the flight track and the flight controlled quantity, of the UAV comprises:
when the transverse flight controlled quantity is zero, determining a transverse adjustment controlled quantity according to the current location of the UAV and the flight track; and
generating a flight adjustment controlled quantity according to the pitching flight controlled quantity and the transverse adjustment controlled quantity, the flight adjustment controlled quantity comprising a flight speed magnitude and a flight direction.

2. The method as claimed in claim 1, wherein the flight adjustment controlled quantity comprises a flight speed magnitude and a flight direction, and the flight controlled quantity comprises a pitching flight controlled quantity;
executing the flight mission according to the action indicated by the flight adjustment controlled quantity, as to enable the UAV to run on the flight track comprises:
flying to the flight track according to the flight speed magnitude and the flight direction; and
executing the flight mission along the flight track according to an action indicated by the pitching flight controlled quantity.

3. The method as claimed in claim 1, wherein the flight controlled quantity comprises a pitching flight controlled quantity and a transverse flight controlled quantity, and the method further comprises:
when both the pitching flight controlled quantity and the transverse flight controlled quantity are zero, judging (304) whether the UAV is located on the flight track;
when a judging result is that the UAV is located on the flight track, hovering (305) over the flight track; and
when the judging result is that the UAV is not located on the flight track, flying (306) to the flight track, and hovering over the flight track.

4. The method as claimed in claim 3, wherein flying to the flight track comprises:
determining a distance between the current location of the UAV and the flight track; and
flying to the flight track according to a route indicated by the distance.

5. A flight control device of an unmanned aerial vehicle, UAV, comprising: a processor, wherein the processor is configured to execute following program modules stored in a memory:
a determining module (501), configured to determine a flight track of the UAV;
a receiving module (502), configured to receive a remote control signal sent by a remote control apparatus which is operated manually;
a converting module (503), configured to convert the remote control signal into a flight controlled quantity of the UAV;
a generating module (504), configured to generate a flight adjustment controlled quantity of the UAV according to a current location, the flight track and the flight controlled quantity, of the UAV; and
an executing module (505), configured to execute a flight mission according to an action indicated by the flight adjustment controlled quantity, as to enable the UAV to run on the flight track;
wherein the flight controlled quantity comprises a pitching flight controlled quantity and a transverse flight controlled quantity, and the generating module (504) comprises:
a determining sub-module, configured to determine, when the transverse flight controlled quantity is zero, a transverse adjustment controlled quantity according to the current location of the UAV and the flight track; and
a generating sub-module, configured to generate the flight adjustment controlled quantity according to the pitching flight controlled quantity and the transverse adjustment controlled quantity, the flight adjustment controlled quantity comprising a flight speed magnitude and a flight direction.

6. The device as claimed in claim 5, wherein the flight adjustment controlled quantity comprises a flight speed magnitude and a flight direction, the flight controlled quantity comprises a pitching flight controlled quantity, and the executing module (505) comprises:
a first executing sub-module, configured to fly to the flight track according to the flight speed magnitude and the flight direction; and
a second executing sub-module, configured to execute the flight mission along the flight track according to an action indicated by the pitching flight controlled quantity.

7. The device as claimed in claim 5, wherein the flight controlled quantity comprises a pitching flight controlled quantity and a transverse flight controlled quantity, and the executing module (505) comprises:
a judging sub-module, configured to judge, when both the pitching flight controlled quantity and the transverse flight controlled quantity are zero, whether the UAV is located on the flight track;
a hovering sub-module, configured to hover over the flight track when the UAV runs on the flight track; and
an executing sub-module, configured to fly to the flight track and hover over the flight track when the UAV does not run on the flight track.

8. The device according to claim 7, wherein the executing sub-module comprises:
a determining element, configured to determine a distance between the current location of the UAV and the flight track; and
a flight element, configured to fly to the flight track according to a route indicated by the distance.

9. An Unmanned Aerial Vehicle, UAV, comprising a flight control system, the flight control system (600) comprising a flight controller (601), a positioning component (602) and a communicating component (603), wherein
the communicating component (603) is configured to receive a remote control signal sent by a remote control apparatus which is operated manually, and transmit the remote control signal to the flight controller;
the positioning component (602) is configured to acquire a current location of the UAV, and transmit the current location of the UAV to the flight controller; and
the flight controller (601) is configured to determine a flight track of the UAV, convert the remote control signal into a flight controlled quantity of the UAV, generate a flight adjustment controlled quantity of the UAV according to the current location, the flight track and the flight controlled quantity, of the UAV, and control the UAV to execute a flight mission according to an action indicated by the flight adjustment controlled quantity, as to enable the UAV to run on the flight track;
wherein the flight controlled quantity comprises a pitching flight controlled quantity and a transverse flight controlled quantity; and
the flight controller (601) is configured to, when generating the flight adjustment controlled quantity of the UAV, determine, if the transverse flight controlled quantity is zero, a transverse adjustment controlled quantity according to the current location of the UAV and the flight track, and generate the flight adjustment controlled quantity according to the pitching flight controlled quantity and the transverse adjustment controlled quantity, the flight adjustment controlled quantity comprising a flight speed magnitude and a flight direction.

10. The UAV as claimed in claim 9, wherein the flight adjustment controlled quantity comprises a flight speed magnitude and a flight direction, and the flight controlled quantity comprises a pitching flight controlled quantity; and
the flight controller (601) is configured to, when controlling the UAV to execute the flight mission according to the action indicated by the flight adjustment controlled quantity, control the UAV to fly to the flight track according to the flight speed magnitude and the flight direction, and control the UAV to execute the flight mission along the flight track according to an action indicated by the pitching flight controlled quantity.

11. The UAV as claimed in claim 9, wherein the flight controlled quantity comprises a pitching flight controlled quantity and a transverse flight controlled quantity; and
the flight controller (601) is configured to, when controlling the UAV to execute the flight mission according to the action indicated by the flight adjustment controlled quantity, judge, when both the pitching flight controlled quantity and the transverse flight controlled quantity are zero, whether the UAV is located on the flight track, control, if the UAV runs on the flight track, the UAV to hover over the flight track, and control, if the UAV does not run on the flight track, the UAV to fly to the flight track and hover over the flight track.

12. The UAV as claimed in claim 11, wherein the flight controller (601) is configured to, when controlling the UAV to fly to the flight track, determine a distance between the current location of the UAV and the flight track, and fly to the flight track according to a route indicated by the distance.

## Patentansprüche

1. Flugsteuerungsverfahren eines unbemanntes Luftfahrzeug, UAV, umfassend:
Bestimmen (101) einer Flugbahn des UAV;
Empfangen (102) eines Fernsteuersignals, das von einem Fernsteuergerät gesendet wurde, das manuell betrieben wird;
Umwandeln (103) des Fernsteuerungssignals in eine fluggesteuerte Größe des UAV;
Erzeugen (104) einer fluganpassungsgesteuerten Größe des UAV gemäß einem aktuellen Standort, der Flugbahn und der fluggesteuerten Größe des UAV; und
Ausführen (105) eines Flugeinsatzes gemäß einer Aktion, die durch die fluganpassungsgesteuerte Größe angezeigt wird, um dem UAV zu ermöglichen, auf der Flugbahn zu fliegen;
wobei die fluggesteuerte Größe eine neigende fluggesteuerte Größe und eine transversale fluggesteuerte Größe umfasst und das Erzeugen der fluganpassungsgesteuerten Größe des UAV gemäß dem aktuellen Standort, der Flugbahn und der fluggesteuerten Größe, des UAV umfasst:
wenn die transversale fluggesteuerte Größe Null ist, Bestimmen einer transversalen anpassungsgesteuerten Größe in Abhängigkeit von der aktuellen Position des UAV und der Flugbahn; und
Erzeugen einer fluganpassungsgesteuerten Größe gemäß der neigenden fluggesteuerten Größe und der transversalen fluganpassungsgesteuerten Größe, wobei die fluganpassungsgesteuerte Größe eine Fluggeschwindigkeitsgröße und eine Flugrichtung umfasst.

2. Verfahren nach Anspruch 1, wobei die fluganpassungsgesteuerte Größe eine Fluggeschwindigkeitsgröße und eine Flugrichtung umfasst und die fluggesteuerte Größe eine neigende fluggesteuerte Größe umfasst;
Ausführen des Flugeinsatzes gemäß einer Aktion, die durch die fluganpassungsgesteuerte Größe angezeigt wird, um dem UAV zu ermöglichen, auf der Flugbahn zu fliegen, umfasst:
Fliegen zu der Flugbahn gemäß der Größe der Fluggeschwindigkeit und der Flugrichtung; und
Ausführen des Flugeinsatzes entlang der Flugbahn gemäß einer Aktion, die durch die neigende fluggesteuerte Größe angezeigt wird.

3. Verfahren nach Anspruch 1, wobei die fluggesteuerte Größe eine neigende fluggesteuerte Größe und eine transversale fluggesteuerte Größe umfasst und das Verfahren ferner umfasst:
wenn sowohl die neigende fluggesteuerte Größe als auch die transversale fluggesteuerte Größe Null sind, Beurteilen (304), ob sich das UAV auf der Flugbahn befindet;
wenn ein Beurteilungsergebnis lautet, dass sich das UAV auf der Flugbahn befindet, Schweben (305) über der Flugbahn; und
wenn das Beurteilungsergebnis lautet, dass sich das UAV nicht auf der Flugbahn befindet, Fliegen (306) zu der Flugbahn und Schweben über der Flugbahn.

4. Verfahren nach Anspruch 3, wobei das Fliegen zu der Flugbahn umfasst:
Bestimmen einer Entfernung zwischen dem aktuellen Standort des UAV und der Flugbahn; und
Fliegen zu der Flugbahn gemäß einer durch die Entfernung angezeigten Route.

5. Flugsteuerungsvorrichtung eines unbemannten Luftfahrzeugs, UAV, umfassend: einen Prozessor, wobei der Prozessor konfiguriert ist, um folgende in einem Speicher gespeicherte Programmmodule auszuführen:
ein Bestimmungsmodul (501), das konfiguriert ist, um eine Flugbahn des UAV zu bestimmen;
ein Empfangsmodul (502), das konfiguriert ist, um ein Fernsteuersignal zu empfangen, das von einem Fernsteuergerät gesendet wurde, das manuell betrieben wird;
ein Umwandlungsmodul (503), das konfiguriert ist, um das Fernsteuerungssignal in eine fluggesteuerte Größe des UAV umzuwandeln;
ein Erzeugungsmodul (504), das konfiguriert ist, um eine fluganpassungsgesteuerte Größe des UAV gemäß einem aktuellen Standort, der Flugbahn und der fluggesteuerten Größe des UAV zu erzeugen; und
ein Ausführungsmodul (505), das konfiguriert ist, um einen Flugeinsatz gemäß einer Aktion auszuführen, die durch die fluganpassungsgesteuerte Größe angezeigt wird, um dem UAV zu ermöglichen, auf der Flugbahn zu fliegen;
wobei die fluggesteuerte Größe eine neigende fluggesteuerte Größe und eine transversale fluggesteuerte Größe umfasst und das Erzeugungsmodul (504) ferner umfasst:
ein Bestimmungsuntermodul, das konfiguriert ist, um, wenn die transversale fluggesteuerte Größe Null ist, eine transversale anpassungsgesteuerte Größe gemäß der aktuellen Position des UAV und der Flugbahn zu bestimmen; und
ein Erzeugungsuntermodul, das konfiguriert ist, um die fluganpassungsgesteuerte Größe gemäß der neigenden fluggesteuerten Größe und der transversalen fluganpassungsgesteuerten Größe zu erzeugen, wobei die fluganpassungsgesteuerte Größe eine Fluggeschwindigkeitsgröße und eine Flugrichtung umfasst.

6. Vorrichtung nach Anspruch 5, wobei die fluganpassungsgesteuerte Größe eine Fluggeschwindigkeitsgröße und eine Flugrichtung umfasst, die fluggesteuerte Größe eine neigende fluggesteuerte Größe umfasst und das Ausführungsmodul (505) ferner umfasst:
ein erstes ausführendes Untermodul, das konfiguriert ist, um gemäß der Größe der Fluggeschwindigkeit und der Flugrichtung zu der Flugbahn zu fliegen; und
ein zweites ausführendes Untermodul, das konfiguriert ist, um den Flugeinsatz entlang der Flugbahn gemäß einer Aktion auszuführen, die durch die neigende fluggesteuerte Größe angezeigt wird.

7. Vorrichtung nach Anspruch 5, wobei die fluggesteuerte Größe eine neigende fluggesteuerte Größe und eine transversale fluggesteuerte Größe umfasst, und das Ausführungsmodul (505) ferner umfasst:
ein Beurteilungsuntermodul, das konfiguriert ist, um zu beurteilen, wenn sowohl die neigende fluggesteuerte Größe als auch die transversale fluggesteuerte Größe Null sind, ob sich das UAV auf der Flugbahn befindet;
ein Schwebeuntermodul, das konfiguriert ist, um über der Flugbahn zu schweben, wenn das UAV auf der Flugbahn fliegt; und
ein Ausführungsuntermodul, das konfiguriert ist, um zu der Flugbahn zu fliegen und über der Flugbahn zu schweben, wenn das UAV nicht auf der Flugbahn fliegt.

8. Vorrichtung nach Anspruch 7, wobei das Ausführungsuntermodul ferner umfasst:
ein Bestimmungselement, das konfiguriert ist, um eine Entfernung zwischen dem aktuellen Standort des UAV und der Flugbahn zu bestimmen; und
ein Flugelement, das konfiguriert ist, um gemäß einer durch die Entfernung angezeigten Route zu der Flugbahn zu fliegen.

9. Unbemanntes Luftfahrzeug, UAV, umfassend ein Flugsteuerungssystem, wobei das Flugsteuerungssystem (600) eine Flugsteuerung (601), eine Positionierungskomponente (602) und eine Kommunikationskomponente (603) umfasst, wobei
die Kommunikationskomponente (603) konfiguriert ist, um ein Fernsteuersignal zu empfangen, das von einem manuell betriebenen Fernsteuergerät gesendet wurde und um das Fernsteuersignal an die Flugsteuerung zu übertragen;
die Positionierungskomponente (602) konfiguriert ist, um eine aktuelle Position des UAV zu beziehen und die aktuelle Position des UAV an die Flugsteuerung zu übertragen; und
die Flugsteuerung (601) konfiguriert ist, um eine Flugbahn des UAV zu bestimmen, das Fernsteuersignal in eine fluggesteuerte Größe des UAV umzuwandeln, eine flugangepasste gesteuerte Größe des UAV gemäß dem aktuellen Standort, der Flugbahn und der fluggesteuerten Größe des UAV zu erzeugen und das UAV zu steuern, um einen Flugeinsatz gemäß einer durch die flugangepasste gesteuerte Größe angezeigten Aktion auszuführen, um dem UAV zu ermöglichen, auf der Flugbahn zu fliegen;
wobei die fluggesteuerte Größe eine neigende fluggesteuerte Größe und eine transversale fluggesteuerte Größe umfasst; und
die Flugsteuerung (601) konfiguriert ist, um, wenn die fluganpassungsgesteuerte Größe des UAV erzeugt wird, eine fluganpassungsgesteuerte Größe gemäß der aktuellen Position des UAV und der Flugbahn zu bestimmen, wenn die fluganpassungsgesteuerte Größe Null ist, und die fluganpassungsgesteuerte Größe gemäß der neigenden fluganpassungsgesteuerten Größe und der fluganpassungsgesteuerten Größe zu erzeugen, wobei die fluganpassungsgesteuerte Größe eine Größe der Fluggeschwindigkeit und eine Flugrichtung umfasst.

10. UAV nach Anspruch 9, wobei die fluganpassungsgesteuerte Größe eine Fluggeschwindigkeitsgröße und eine Flugrichtung umfasst und die fluggesteuerte Größe eine neigende fluggesteuerte Größe umfasst; und
die Flugsteuerung (601) konfiguriert ist, um, wenn das UAV gesteuert wird, um den Flugeinsatz gemäß der durch die fluganpassungsgesteuerte Größe angezeigten Aktion auszuführen, das UAV so zu steuern, dass es gemäß der Größe der Fluggeschwindigkeit und der Flugrichtung zu der Flugbahn fliegt, und das UAV so zu steuern, dass es den Flugeinsatz entlang der Flugbahn gemäß einer durch die fluganpassungsgesteuerte Größe angezeigten Aktion ausführt.

11. UAV nach Anspruch 9, wobei die fluggesteuerte Größe eine neigende fluggesteuerte Größe und eine transversale fluggesteuerte Größe umfasst; und
die Flugsteuerung (601) konfiguriert ist, um, wenn das UAV gesteuert wird, um den Flugeinsatz gemäß der durch die fluganpassungsgesteuerten Größe angezeigten Aktion auszuführen, zu beurteilen, ob sich das UAV auf der Flugbahn befindet, wenn sowohl die neigende fluggesteuerte Größe als auch die transversale fluggesteuerte Größe Null sind, das UAV zu steuern, um über der Flugbahn zu schweben, wenn das UAV auf der Flugbahn fliegt, und das UAV zu steuern, um zu der Flugbahn zu fliegen und über der Flugbahn zu schweben, wenn das UAV nicht auf der Flugbahn fliegt.

12. UAV nach Anspruch 11, wobei die Flugsteuerung (601) konfiguriert ist, um, wenn das UAV gesteuert wird, um zu der Flugbahn zu fliegen, eine Entfernung zwischen dem aktuellen Standort des UAV und der Flugbahn zu bestimmen und zu der Flugbahn gemäß einer durch die Entfernung angezeigten Route zu fliegen.

## Revendications

1. Procédé de commande de vol d'un véhicule aérien sans pilote, UAV, comprenant :
la détermination (101) d'une trajectoire de vol de l'UAV ;
la réception (102) d'un signal de commande à distance envoyé par un appareil de commande à distance qui est actionné manuellement ;
la conversion (103) du signal de commande à distance en une quantité commandée de vol de l'UAV ;
la génération (104) d'une quantité commandée d'ajustement de vol de l'UAV selon un emplacement actuel, la trajectoire de vol et la quantité commandée de vol de l'UAV ; et
l'exécution (105) d'une mission de vol selon une action indiquée par la quantité commandée d'ajustement de vol, afin de permettre à l'UAV de se déplacer sur la trajectoire de vol ;
dans lequel la quantité commandée de vol comprend une quantité commandée de vol en tangage et une quantité commandée de vol transversal, et la génération de la quantité commandée d'ajustement de vol de l'UAV selon l'emplacement actuel, la trajectoire de vol et la quantité commandée de vol de l'UAV, comprend :
lorsque la quantité commandée de vol transversal est nulle, la détermination d'une quantité commandée d'ajustement transversal selon l'emplacement actuel de l'UAV et la trajectoire de vol ; et
la génération d'une quantité commandée d'ajustement de vol selon la quantité commandée de vol en tangage et la quantité commandée d'ajustement transversal, la quantité commandée d'ajustement de vol comprenant une amplitude de vitesse de vol et une direction de vol.

2. Procédé selon la revendication 1, dans lequel la quantité commandée d'ajustement de vol comprend une amplitude de vitesse de vol et une direction de vol et la quantité commandée de vol comprend une quantité commandée de vol en tangage ;
l'exécution de la mission de vol selon l'action indiquée par la quantité commandée d'ajustement de vol, de manière à permettre à l'UAV de suivre la trajectoire de vol, comprend :
le vol selon la trajectoire de vol selon l'amplitude de vitesse de vol et la direction de vol ; et
l'exécution de la mission de vol le long de la trajectoire de vol selon une action indiquée par la quantité commandée de vol en tangage.

3. Procédé selon la revendication 1, dans lequel la quantité commandée de vol comprend une quantité commandée de vol en tangage et une quantité commandée de vol transversal, et le procédé comprend en outre :
lorsqu'à la fois la quantité commandée de vol en tangage et la quantité commandée de vol transversal sont nulles, une évaluation (304) pour savoir si l'UAV est situé sur la trajectoire de vol ;
lorsqu'un résultat d'évaluation est tel que l'UAV est situé sur la trajectoire de vol, le survol (305) de la trajectoire de vol ; et
lorsque le résultat d'évaluation est tel que l'UAV n'est pas situé sur la trajectoire de vol, le vol (306) vers la trajectoire de vol et le survol de la trajectoire de vol.

4. Procédé selon la revendication 3, dans lequel le vol vers la trajectoire de vol comprend :
la détermination d'une distance entre l'emplacement actuel de l'UAV et la trajectoire de vol ; et
le vol vers la trajectoire de vol selon un itinéraire indiqué par la distance.

5. Dispositif de commande de vol d'un véhicule aérien sans pilote, UAV, comprenant :
un processeur, dans lequel le processeur est configuré pour exécuter les modules de programme suivants stockés dans une mémoire :
un module de détermination (501), configuré pour déterminer une trajectoire de vol de l'UAV ;
un module de réception (502), configuré pour recevoir un signal de commande à distance envoyé par un appareil de commande à distance qui est actionné manuellement ;
un module de conversion (503), configuré pour convertir le signal de commande à distance en une quantité commandée de vol de l'UAV ;
un module de génération (504), configuré pour générer une quantité commandée d'ajustement de vol de l'UAV selon un emplacement actuel, la trajectoire de vol et la quantité commandée de vol de l'UAV ; et
un module d'exécution (505), configuré pour exécuter une mission de vol selon une action indiquée par la quantité commandée d'ajustement de vol, afin de permettre à l'UAV de se déplacer sur la trajectoire de vol ;
dans lequel la quantité commandée de vol comprend une quantité commandée de vol en tangage et une quantité commandée de vol transversal et le module de génération (504) comprend :
un sous-module de détermination, configuré pour déterminer, lorsque la quantité commandée de vol transversal est nulle, une quantité commandée d'ajustement transversal selon la position actuelle de l'UAV et la trajectoire de vol ; et
un sous-module de génération, configuré pour générer la quantité commandée d'ajustement de vol selon la quantité commandée de vol en tangage et la quantité commandée d'ajustement transversal, la quantité commandée d'ajustement de vol comprenant une amplitude de vitesse de vol et une direction de vol.

6. Dispositif selon la revendication 5, dans lequel la quantité commandée d'ajustement de vol comprend une amplitude de vitesse de vol et une direction de vol, la quantité commandée de vol comprend une quantité commandée de vol en tangage et le module d'exécution (505) comprend :
un premier sous-module d'exécution, configuré pour voler vers la trajectoire de vol selon l'amplitude de vitesse de vol et la direction de vol ; et
un second sous-module d'exécution, configuré pour exécuter la mission de vol le long de la trajectoire de vol selon une action indiquée par la quantité commandée de vol en tangage.

7. Dispositif selon la revendication 5, dans lequel la quantité commandée de vol comprend une quantité commandée de vol en tangage et une quantité commandée de vol transversal, et le module d'exécution (505) comprend :
un sous-module d'évaluation, configuré pour évaluer, lorsqu'à la fois la quantité commandée de vol en tangage et la quantité commandée de vol transversal sont nulles, si l'UAV est situé sur la trajectoire de vol ;
un sous-module de survol, configuré pour survoler la trajectoire de vol lorsque l'UAV se déplace sur la trajectoire de vol ; et
un sous-module d'exécution, configuré pour voler vers la trajectoire de vol et survoler la trajectoire de vol lorsque l'UAV ne se déplace pas sur la trajectoire de vol.

8. Dispositif selon la revendication 7, dans lequel le sous-module d'exécution comprend :
un élément de détermination, configuré pour déterminer une distance entre l'emplacement actuel de l'UAV et la trajectoire de vol ; et
un élément de vol, configuré pour voler vers la trajectoire de vol selon un itinéraire indiqué par la distance.

9. Véhicule aérien sans pilote, UAV, comprenant un système de commande de vol, le système de commande de vol (600) comprenant un contrôleur de vol (601), un composant de positionnement (602) et un composant de communication (603), dans lequel
le composant de communication (603) est configuré pour recevoir un signal de commande à distance envoyé par un appareil de commande à distance qui est actionné manuellement, et transmettre le signal de commande à distance au contrôleur de vol ;
le composant de positionnement (602) est configuré pour acquérir un emplacement actuel de l'UAV et transmettre l'emplacement actuel de l'UAV au contrôleur de vol ; et
le contrôleur de vol (601) est configuré pour déterminer une trajectoire de vol de l'UAV, convertir le signal de commande à distance en une quantité commandée de vol de l'UAV, générer une quantité commandée d'ajustement de vol de l'UAV selon l'emplacement actuel, la trajectoire de vol et la quantité commandée de vol de l'UAV, et commander l'UAV pour qu'il exécute une mission de vol selon une action indiquée par la quantité commandée d'ajustement de vol, afin de permettre à l'UAV de se déplacer sur la trajectoire de vol ;
dans lequel la quantité commandée de vol comprend une quantité commandée de vol en tangage et une quantité commandée de vol transversal ; et
le contrôleur de vol (601) est configuré pour, lors de la génération de la quantité commandée d'ajustement de vol de l'UAV, déterminer, si la quantité commandée de vol transversal est nulle, une quantité commandée d'ajustement transversal selon l'emplacement actuel de l'UAV et la trajectoire de vol, et générer la quantité commandée d'ajustement de vol selon la quantité commandée de vol en tangage et la quantité commandée d'ajustement transversal, la quantité commandée d'ajustement de vol comprenant une amplitude de vitesse de vol et une direction de vol.

10. UAV selon la revendication 9, dans lequel la quantité commandée d'ajustement de vol comprend une amplitude de vitesse de vol et une direction de vol et la quantité commandée de vol comprend une quantité commandée de vol en tangage ; et
le contrôleur de vol (601) est configuré pour, lorsqu'il commande l'UAV pour qu'il exécute la mission de vol selon l'action indiquée par la quantité commandée d'ajustement de vol, commander l'UAV pour qu'il vole vers la trajectoire de vol selon l'amplitude de vitesse de vol et la direction de vol et commander l'UAV pour qu'il exécute la mission de vol le long de la trajectoire de vol selon une action indiquée par la quantité commandée de vol en tangage.

11. UAV selon la revendication 9, dans lequel la quantité commandée de vol comprend une quantité commandée de vol en tangage et une quantité commandée de vol transversal ; et
le contrôleur de vol (601) est configuré pour, lorsqu'il commande l'UAV pour qu'il exécute la mission de vol selon l'action indiquée par la quantité commandée d'ajustement de vol, évaluer, lorsqu'à la fois la quantité commandée de vol en tangage et la quantité commandée de vol transversal sont nulles, si l'UAV est situé sur la trajectoire de vol, commander, si l'UAV se déplace sur la trajectoire de vol, l'UAV pour qu'il survole la trajectoire de vol et commander, si l'UAV ne se déplace pas sur la trajectoire de vol, l'UAV pour qu'il vole vers la trajectoire de vol et survole la trajectoire de vol.

12. UAV selon la revendication 11, dans lequel le contrôleur de vol (601) est configuré pour, lorsqu'il commande l'UAV pour qu'il vole vers la trajectoire de vol, déterminer une distance entre l'emplacement actuel de l'UAV et la trajectoire de vol et voler vers la trajectoire de vol selon un itinéraire indiqué par la distance.
